# EUROPEAN PATENT SPECIFICATION

(11) **EP 4 292 430 B1**
(45) Date of publication and mention of the grant of the patent: **27.08.2025**
(21) Application number: 22178622.1
(22) Date of filing: 13.06.2022
(51) Int. Cl.: A01K 29/00, G01B 11/04, A01K 61/95

(54) **FISH MEASURING DEVICE AND FISH MEASURING METHOD**
FISCHMESSVORRICHTUNG UND FISCHMESSVERFAHREN
DISPOSITIF DE MESURE DU POISSON ET PROCÉDÉ DE MESURE DU POISSON

(43) Date of publication of application: 20.12.2023
(73) Proprietor: FURUNO ELECTRIC CO., LTD., Nishinomiya-City, Hyogo 662-8580 (JP)
(72) Inventor: IKEGAMI, Atsushi, Nishinomiya-City, 662-8580 (JP); NAKAMURA, Satoshi, Nishinomiya-City, 662-8580 (JP); SATO, Wataru, Nishinomiya-City, 662-8580 (JP)
(74) Representative: Cleveland Scott York

(56) References cited:
- EP-A1- 2 962 556
- JP-A- 2001 045 905
- US-A- 5 222 458
- US-A1- 2020 288 680
- US-A1- 2021 319 550

## Description

The present invention relates to a fish measuring device and a fish measuring method for measuring a fish swimming in water.

Conventionally, an apparatus for measuring size of a fish by imaging the fish swimming in water is well known in the prior art. In this type of device, a side of the fish is illuminated by light during imaging. For example, a Light Emitting Diode (LED) is placed around a camera to illuminate the fish in the imaging direction. A device of this kind is disclosed in the following European Patent document: EP3465080.

However, in inland aquaculture, a fish cage is installed under indoor conditions, thus natural light is less likely to enter the water from the water surface than in marine aquaculture. Therefore, in the above-described configuration in which the fish is illuminated in the imaging direction, the brightness of an upper part of a body of the fish is likely to be insufficient. To solve this problem, when illumination intensity is increased, the brightness of a lower part of the body of the fish becomes excessive, and it becomes difficult to accurately acquire characteristic features of the fish from an image of the fish. In inland aquaculture, background in the imaging direction is often dark or has a special color or pattern. Therefore, in the captured image, boundary between the fish and the background is unclear, and the characteristic features of the fish may not be accurately acquired. Further, when density of the fish is high in the fish cage, it is difficult to secure a distance between the fish and the camera, necessary for measuring the fish.

In view of these problems, it is an object of the present invention to provide a fish measuring device and a fish measuring method capable of accurately measuring a fish from a captured image.

US 2021/319550 discloses a multi-chamber lighting controller for aquaculture. An imaging station is used to capture an image of a fish. Pairs of imaging assemblies coordinate pulsing light of a first and a second color and capturing images of the fish while the fish is illuminated by the first and the second color. In one embodiment, a tube feeds into a multi-chamber fish imaging station.

According to one aspect of the invention there is provided a fish measuring device as defined in claim 1.

According to another aspect of the invention there is provided a fish measuring method as defined in claim 15.

Preferred features of the invention are recited in the dependent claims.

In the fish measuring device, the fish pass is illuminated from above by the first illuminating device, and the fish pass is illuminated from side by the second illuminating device. Therefore, both an upper part and a lower part of the body of the fish may be well illuminated by adjusting illumination intensity and illumination ratio of the first illuminating device and the second illuminating device according to fish species. Further, the background board is arranged in the field of view of the imaging device, and therefore the contrast between the fish and the background is enhanced. Further, the portion of the fish pass on the imaging device side is blocked by the fish blocking device, therefore the number of fish included in an imaging region may be reduced even when a density of fish is high, and a distance necessary for measuring the fish may be secured between the fish and the imaging device. Thus, a high-quality fish image may be acquired, and the fish swimming in the water may be accurately measured.

In the fish measuring device, according to the first aspect, the fish blocking device may be placed in the fish pass such that the shortest distance between the background board and the fish blocking device is smaller than the shortest distance between the background board and the imaging device.

According to this configuration, the fish may be easily separated from the imaging device by a difference between the shortest distance between the background board and the fish blocking device and the shortest distance between the background board and the imaging device.

In the fish measuring device, according to the present aspect, the fish blocking device includes one or more boards.

The board and a direction in which the imaging device faces make an oblique angle in a plan view.

In the plan view, the board is closer to an entrance of the fish pass on the background board side than on the imaging device side.

According to this configuration, the fish entering the imaging region through a space between the first board and the background board may be separated from the imaging device.

Preferably, the board may include one or more holes for water to flow. Thus, resistance of water flow to the board may be reduced.

In the fish measuring device, according to the present aspect, the fish blocking device may further include a second board different from the first board. The second board and the direction in which the imaging device faces may make a second oblique angle in a plan view.

In this case, in the plan view, the second board may be closer to an exit of the fish pass on the background board side than on the imaging device side.

According to this configuration, the fish, which passes through the imaging region towards the space between the second board and the background board, may be separated from the imaging device.

Preferably, the second board may include one or more holes for water to flow. Thus, resistance of the water flow to the second board may be reduced.

In the fish measuring device, according to the present aspect, the imaging device may substantially face in a horizontal direction. The second illuminating device may illuminate at least in a direction substantially the same as the direction in which the imaging device faces.

According to present aspect, the fish swimming in the pass may be illuminated in the imaging direction by the second illuminating device.

In the fish measuring device, according to the present aspect, the second illuminating device may include an array of a plurality of light emitting diodes (LEDs) grouped into a first group and a second group, wherein the first group illuminates horizontally and the second group illuminates in a different illumination direction than the first group.

According to this configuration, the fish swimming in the pass may be horizontally illuminated by the second illuminating device and may be illuminated in a direction different from the horizontal direction.

The illumination direction of the second group may be vertical. Thus, the fish swimming in the pass may be vertically illuminated by the first illuminating device and the second group of the second illuminating device.

The fish measuring device, according to the present aspect, may further include a frame on which the imaging device, the background board, the first illuminating device, the second illuminating device, and the fish blocking device are attached, and a rail to vertically move the frame.

According to this configuration, by moving the frame along the rail, the imaging device, the background board, the first illuminating device, the second illuminating device, and the fish blocking device, may be moved integrally in a depth direction. Therefore, the fish pass and an imaging position of the fish may be positioned at a depth position suitable for the fish species to be measured.

In the fish measuring device, according to the present aspect, the processing circuitry may be configured to calculate a size of the fish swimming in the fish pass from the captured image.

According to this configuration, the size of the fish may be calculated with high accuracy based on high-quality fish images.

In the fish measuring method, according to the second aspect, the same effect as that of the fish measuring device, according to the first aspect, may be achieved.

As described above, according to the present invention, it is possible to provide a fish measuring device and a fish measuring method capable of accurately measuring a fish from a captured image.

The effect or significance of the present disclosure will become more apparent from the description of the following embodiments. However, the following embodiments are only example embodiments of the present disclosure, and the present disclosure is not limited to those examples described in the following embodiments.
FIG. 1 is a perspective view showing a configuration of a fish measuring device, according to an embodiment;
FIG. 2 is a side view showing a configuration of the fish measuring device, according to an embodiment;
FIG. 3 is a side view showing a configuration of the fish measuring device, according to an embodiment;
FIG. 4 is a perspective view showing a configuration of a support frame and a lifting device, according to an embodiment;
FIG. 5 is a perspective view showing a structure in which the fish measuring device, the lifting device, a background board and a fish blocking device, are omitted, according to an embodiment;
FIG. 6 is a perspective view showing an installation state of the background board with respect to an upper frame, according to an embodiment;
FIG. 7 is an enlarged perspective view of a structure near the support frame of the fish measuring device, according to an embodiment;
FIG. 8 is a plan view showing a configuration near the support frame, according to an embodiment;
FIG. 9(a) is a diagram schematically showing an operation of the fish blocking device, according to an embodiment;
FIG. 9(b) is a diagram schematically showing a state in which the fish blocking device is not used, according to a comparative example;
FIG. 10(a) is a diagram schematically showing a captured image of one camera in a case where the fish blocking device is installed, according to an embodiment;
FIG. 10(b) is a diagram schematically showing a captured image of one camera in a case where the fish blocking device is not installed, according to a comparative example;
FIG. 11(a) is a diagram schematically showing a captured image of another comparative example in which the background board is omitted, according to an embodiment;
FIG. 11(b) is a diagram schematically showing a captured image in a case where a first illuminating device is omitted, according to another comparative example;
FIG. 12 is a block diagram showing a configuration of the fish measuring device, according to an embodiment;
FIG. 13(a) is a flowchart showing a processing performed by processing circuitry of a processing unit when a fish measurement start instruction is received, according to an embodiment;
FIG. 13(b) is a flowchart showing a processing performed by the processing circuitry of the processing unit when the fish measurement start instruction is received, according to a modification;
FIG. 14(a) is a diagram schematically showing an operation of the fish blocking device, according to a modification; and
FIG. 14(b) is a diagram schematically showing an operation of the fish blocking device, according to a modification.

Embodiments of the present disclosure will be described below with reference to the drawings. In the embodiments, a fish measuring device is installed in an indoor fish cage. For convenience, XYZ axes orthogonal to each other are appropriately appended to the drawings. The X-axis direction and Y-axis direction are horizontal, and the Z-axis direction is vertical. The positive X-axis direction is the direction in which fish move.

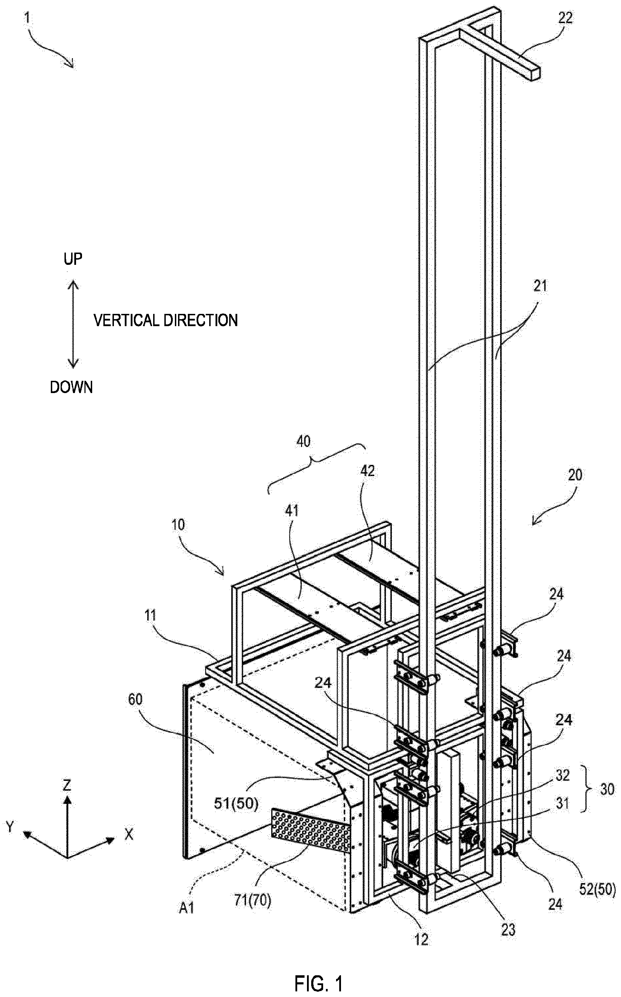

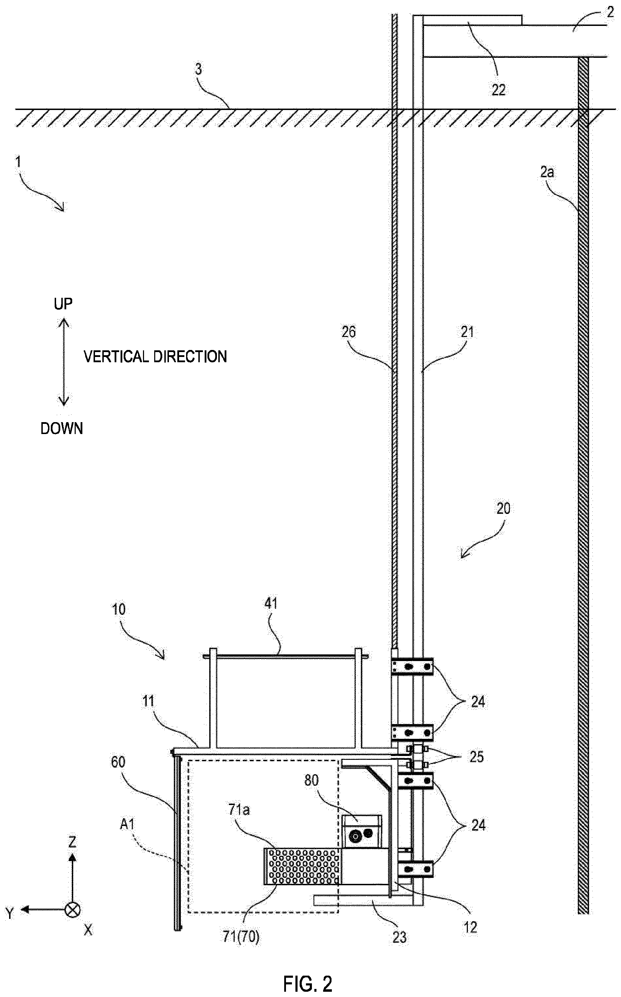

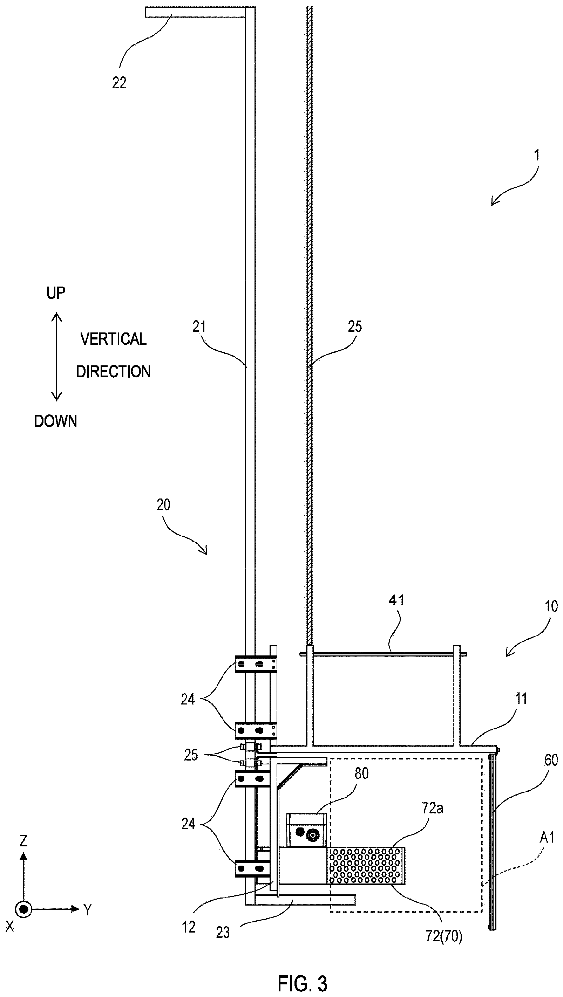

FIG. 1 is a perspective view of a fish measuring device 1. FIGS. 2 and 3 are side views of the fish measuring device 1 when viewed in the X-axis positive direction and the X-axis negative direction, respectively.

As shown in FIGS. 1 to 3, the fish measuring device 1 may include a support frame 10 (which may also be referred to as frame 10), a lifting device 20, an imaging device 30, a first illuminating device 40, a second illuminating device 50, a background board 60, a fish blocking device 70, and a processing unit 80.

A fish pass A1 is formed between the imaging device 30 and the background board 60 by arranging the background board 60 opposite to the imaging device 30. The first illuminating device 40 illuminates the fish pass A1 from above. The second illuminating device 50 illuminates the fish pass A1 from a side of the imaging device 30. The fish blocking device 70 secures a distance between the imaging device 30 and the fish by blocking a part of the fish pass A1 on the imaging device 30 side.

The support frame 10 includes an upper frame 11 and a lower frame 12. The lifting device 20 includes a pair of rails 21 arranged in the X-axis direction, and protrusions 22, 23. The protrusion 22 projects in the negative Y-axis direction from the center of a beam connecting upper ends of the pair of rails 21 in the X-axis direction. The protrusion 23 projects in the positive Y-axis direction from the center of a beam connecting lower ends of the pair of rails 21 in the X-axis direction. The upper frame 11 and the lower frame 12 may be supported by the pair of rails 21 to be movable in the vertical direction by a plurality of guide rollers 24 and a plurality of guide rollers 25.

As shown in FIG. 2, the fish measuring device 1 is installed in a fish cage 2 by hanging the protrusion 22 on an edge of the fish cage 2. The protrusion 22 may be fixed to the edge of the fish cage 2 by a predetermined fixing tool. The support frame 10 may be submerged in water from a water surface 3 while being guided by the lifting device 20. In this state, the lifting device 20 may be separated from a net 2a of the fish cage 2 by a predetermined distance. A user moves a rope 26 to position the imaging device 30 at a depth where the fish to be measured swim. Thereafter, the user fixes the rope 26 to the edge of the fish cage 2. Thus, the installation of the fish measuring device 1 is completed.

The water in the fish cage 2 may be flowed in the X-axis negative direction by a water flow device. Thus, the fish in the fish cage 2 swim in the X-axis positive direction. When swimming, a part of the fish in the fish cage 2 passes through the fish pass A1. Thus, the fish may be imaged by the imaging device 30. The captured fish image may be transmitted from the processing unit 80 to a terminal (not shown) on the fish cage 2 via a communication cable (not shown). Thus, a size of the fish may be measured at the terminal from the image of the fish. The direction in which the water in the fish cage 2 flows is not limited to the X-axis negative direction and may be the X-axis positive direction.

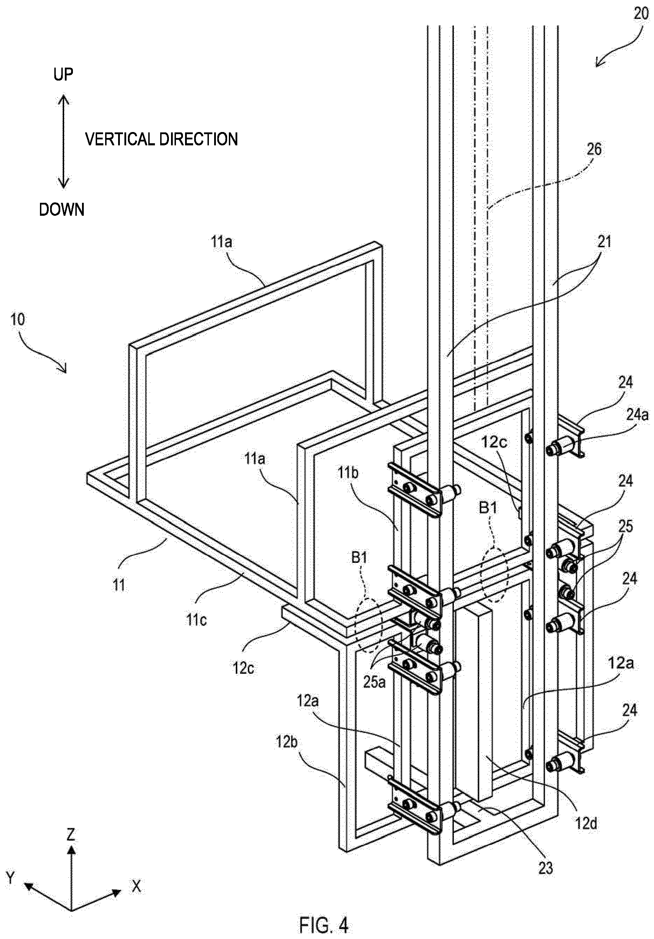

FIG. 4 is a perspective view showing a configuration of the support frame 10 and the lifting device 20.

The upper frame 11 may be integrally provided with two arch portions 11a, an arch portion 11b, and a loop portion 11c. In a plan view, the loop portion 11c may be a rectangle long in the Y-axis direction. The two arch portions 11a are formed in parallel in the Y-axis direction to straddle two long sides of the loop portion 11c. The two arch portions 11a are rectangular when viewed in the Y-axis direction. The two arch portions 11a have the same shape. The arch portion 11b may be formed in the center of the short side of the Y-axis negative side of the loop portion 11c. The arch portion 11b is rectangular when viewed in the Y-axis direction. The arch portion 11b has the same height as the two arch portions 11a, and its width in the X-axis direction is narrower than that of the two arch portions 11a.

The lower frame 12 may be integrally provided with two beam portions 12a, a loop portion 12b, two protrusions 12c, and a plate portion 12d. When viewed in the Y-axis direction, the loop portion 12b may be a rectangle long in the X-axis direction. The two beam portions 12a are formed side by side in the X-axis direction to connect the two long sides of the loop portion 12b. The two protrusions 12c may protrude in the Y-axis positive direction from the upper two corners of the loop portion 12b. The plate portion 12d is formed to connect the two long sides of the loop portion 12b. The Y-axis positive side surface of the plate portion 12d is included in the same plane as the Y-axis positive side surface of the loop portion 12b. The Y-axis negative side of the plate portion 12d protrudes from the Y-axis negative side surface of the loop portion 12b.

The upper frame 11 is symmetrical in the X-axis direction and symmetrical in the Y-axis direction. The lower frame 12 is symmetrical in the X-axis direction and symmetrical in the Z-axis direction. The upper frame 11 and the lower frame 12 are constituted of a material having high rigidity and hardly rusting. The upper frame 11 and the lower frame 12 are made of, for example, a metal material such as stainless steel (SUS). The cross sections of the upper frame 11 and the lower frame 12 are substantially square. The pair of rails 21, the protrusion 22, and the protrusion 23 of the lifting device 20 are also made of a material having high rigidity such as SUS and hard to rust. The cross sections of the pair of rails 21 are substantially square.

In the upper frame 11, two guide rollers 24 of the plurality of guide rollers 24 are installed on the X-axis positive side of the arch portion 11b, and two guide rollers 24 of the plurality of guide rollers 24 are installed on the X-axis negative side of the arch portion 11b. The plurality of guide rollers 24 may include a pair of rollers 24a arranged in the Y-axis direction. The pair of rollers 24a sandwich the pair of rails 21 in the Y-axis direction. Thus, the upper frame 11 is supported by the pair of rails 21 to be movable in the vertical direction while being restricted from moving in the Y-axis direction.

Further, two guide rollers 25 are provided on the Y-axis negative side of the loop portion 11c. The guide roller 25 includes one roller 25a. Of the two guide rollers 25 installed on the loop portion 11c, the roller 25a of the guide roller 25 on the X-axis positive side abuts on the X-axis positive side surface of the rail 21 on the X-axis positive side, and the roller 25a of the guide roller 25 on the X-axis negative side abuts on the X-axis negative side surface of the rail 21 on the X-axis negative side. Thus, the upper frame 11 is supported by the pair of rails 21 to be movable in the vertical direction while being restricted from moving in the X-axis direction.

In the lower frame 12, two guide rollers 24 of the plurality of guide rollers 24 are installed on the beam portion 12a on the X-axis positive side, and two guide rollers 24 of the plurality of guide rollers 24 are installed on the beam portion 12a on the X-axis negative side. The pair of rails 21 are sandwiched in the Y-axis direction by the pair of rollers 24a of the plurality of guide rollers 24. Thus, the lower frame 12 is supported by the pair of rails 21 to be movable in the vertical direction while being restricted from moving in the Y-axis direction.

Further, two guide rollers 25 are installed on the upper side of the loop portion 12b. Among the guide rollers 25, the roller 25a of the guide roller 25 on the X-axis positive side abuts on the X-axis positive side surface of the rail 21 on the X-axis positive side, and the roller 25a of the guide roller 25 on the X-axis negative side abuts on the X-axis negative side surface of the rail 21 on the X-axis negative side. Thus, the lower frame 12 is supported by the pair of rails 21 to be movable in the vertical direction while being restricted from moving in the X-axis direction.

Thus, the upper frame 11 and the lower frame 12 are supported on the pair of rails 21 by the plurality of guide rollers 24 and the plurality of guide rollers 25, to be movable in the vertical direction. A downward movement of the lower frame 12 is regulated by the protrusion 23. That is, the lower surface of the loop portion 12b is brought into contact with the upper surface of the protrusion 23, thereby preventing the lower frame 12 from slipping downward from the lifting device 20.

The upper frame 11 is supported by the two protrusions 12c of the lower frame 12. In this state, the Y-axis negative side of the loop portion 11c and the upper side of the loop portion 12b are bound together at position B1, for example. Thus, the upper frame 11 and the lower frame 12 are unified. The rope 26 is connected to the upper side of the arch portion 11b. Thus, the support frame 10 may be moved upward by lifting the rope 26 upward.

Note that the lifting device 20 does not have a structure for restricting upward movement of the support frame 10. Therefore, the support frame 10 may be easily removed from the lifting device 20. The support frame 10 may be easily mounted on the lifting device 20 by introducing the pair of rails 21 into the plurality of guide rollers 24 and the plurality of guide rollers 25 from the top.

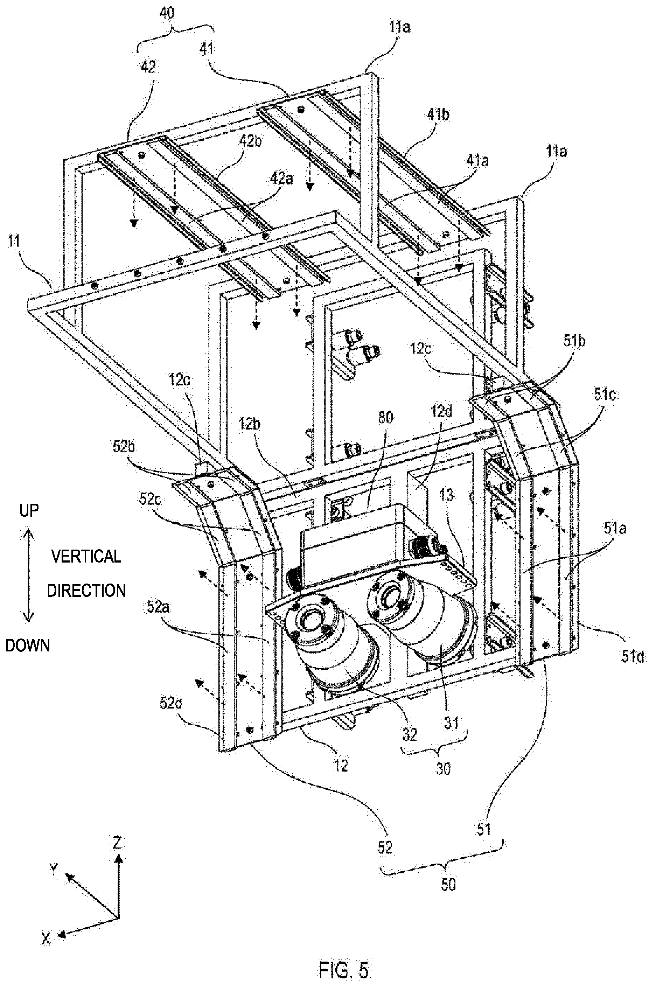

FIG. 5 is a perspective view showing a structure of the fish measuring device 1 shown in FIG. 1 without the lifting device 20, the background board 60 and the fish blocking device 70.

The imaging device 30 includes two cameras 31, 32 arranged in the X-axis direction. The cameras 31 and 32 constitute a stereo camera for measuring the size of the fish. The cameras 31 and 32 may be attached to the lower frame 12 via a support plate 13. That is, the support plate 13 is disposed on the plate portion 12d of the lower frame 12, and the cameras 31 and 32 are disposed on the lower surface of the support plate 13. The support plate 13 is made of a material such as SUS having high rigidity and hard to rust.

Imaging directions of the cameras 31 and 32 are substantially horizontal. The imaging direction of the camera 31 is inclined in the X-axis positive direction by a predetermined angle from the Y-axis positive direction. The imaging direction of the camera 32 is inclined in the X-axis negative direction by a predetermined angle from the Y-axis positive direction. The inclination angles of the cameras 31 and 32 in the imaging direction with respect to the Y-axis direction, are the same.

The first illuminating device 40 includes two lighting units 41, 42 arranged in the X-axis direction. The lighting unit 41 includes a pair of LED arrays 41a extending in the Y-axis direction and a flat base plate 41b supporting the pair of LED arrays 41a. In the LED array 41a, a plurality of LEDs (Light Emitting Diodes) may be arranged side by side in the Y-axis direction. Each LED emits white light at a predetermined spread angle. The base plate 41b is composed of a rust-resistant material. When the base plate 41b is mounted on the lower surfaces of the two arch portions 11a of the upper frame 11, the lighting unit 41 is installed on the upper frame 11.

The lighting unit 42 has the same configuration as the lighting unit 41. The lighting unit 42 includes a pair of LED arrays 42a extending in the Y-axis direction and a flat base plate 42b supporting the LED arrays 42a. In the LED array 42a, a plurality of LEDs is arranged side by side in the Y-axis direction. When the base plate 42b is mounted on the lower surfaces of the two arch portions 11a of the upper frame 11, the lighting unit 42 of the two lighting units 41, 42 is installed on the upper frame 11.

The second illuminating device 50 includes two lighting units 51, 52 arranged in the X-axis direction. A lighting unit 51 may include 3 pairs of LED arrays 51a, 51b, 51c extending in parallel with each other, and a flat base plate 51d supporting the LED arrays 51a, 51b, 51c. In the LED arrays 51a, 51b, and 51c, a plurality of LEDs is arranged side by side in the direction in which the LED arrays extend. Each LED emits white light at a predetermined spread angle. The base plate 51d is bent in two steps at two bending lines parallel to the X axis. The base plate 51d is composed of a rust-resistant material.

The pair of LED arrays 51a is disposed in a portion of the base plate 51d parallel to the X-Z plane. The pair of LED arrays 51b is disposed in a portion of the base plate 51d parallel to the X-Y plane. The pair of LED arrays 51c is disposed in a portion of the base plate 51d inclined with respect to the X-Z plane and the X-Y plane. Therefore, the plurality of LEDs arranged in the lighting unit 51 is divided into a first group included in the pair of LED arrays 51a, a second group included in the pair of LED arrays 51b, and a third group included in the pair of LED arrays 51c by the two bending lines.

The portion parallel to the X-Z plane of the base plate 51d is installed on the front surface of the X-axis negative side of the loop portion 12b, and the portion parallel to the X-Y plane of the base plate 51d is installed on the lower surface of one of the two protrusions 12c on the X-axis negative side. Thus, the lighting unit 51 is installed on the lower frame 12.

The lighting unit 52 has a configuration similar to that of the lighting unit 51. The lighting unit 52 includes 3 pairs of LED arrays 52a, 52b, 52c extending in parallel with each other, and a flat base plate 52d supporting the LED arrays. The installation method of the lighting unit 52 is the same as that of the lighting unit 51. The base plate 52d bent in two steps is installed on the Y-axis positive side surface of the X-axis positive side loop portion 12b of the lower frame 12 and the lower surface of one of the two protrusions 12c on the X-axis positive side, whereby the lighting unit 52 is installed on the X-axis positive side end part of the lower frame 12. The plurality of LEDs arranged in the lighting unit 52 is divided into a first group included in the pair of LED arrays 52a, a second group included in the pair of LED arrays 52b, and a third group included in the pair of LED arrays 52c.

An illumination direction of the pair of LED arrays 51a, 52a (first group of LEDs) is substantially horizontal (positive Y-axis direction). An illumination direction of the pair of LED arrays 51b, 52b (second group of LEDs) is substantially vertically down (negative Z-axis direction). An illumination direction of the pair of LED arrays 51c, 52c (third group of LEDs) is a direction inclined vertically downward by a predetermined angle (for example 45°) from the horizontal direction (Y-axis positive direction).

The processing unit 80 may be installed on the upper surface of the support plate 13. The processing unit 80 may be constituted by housing a circuit board in a box provided with a waterproof structure. Processing circuitry for controlling the imaging device 30, the first illuminating device 40, and the second illuminating device 50, and a communication interface for communicating with the terminal installed on land outside the fish cage are mounted on the circuit board. The processing unit 80 and the terminal are connected by a communication cable (not shown).

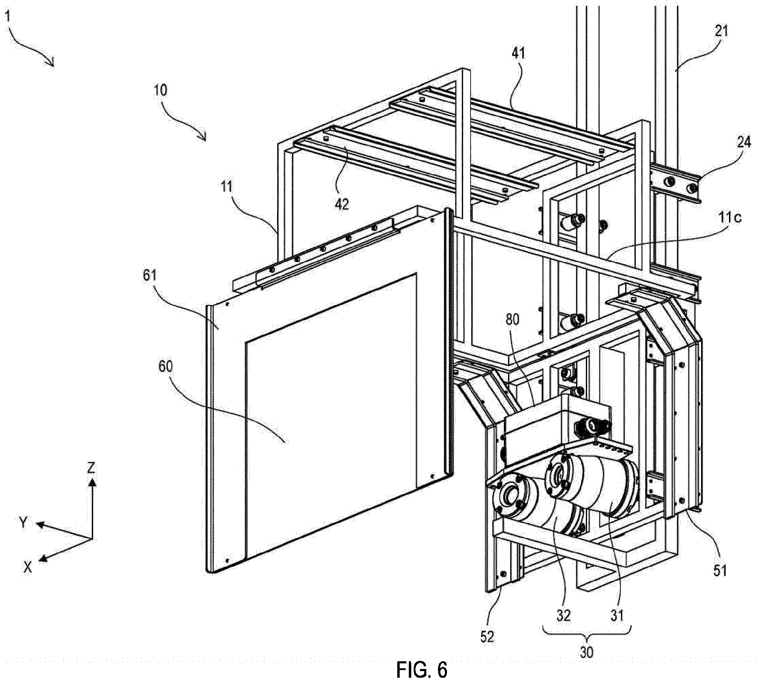

FIG. 6 is a perspective view showing an installation state of the background board 60 with respect to the upper frame 11.

The background board 60 may be installed on the upper frame 11 via a support plate 61. That is, the support plate 61 is provided on the Y-axis positive side surface of the loop portion 11c of the upper frame 11, and the background board 60 is provided on the Y-axis negative side surface of the support plate 61. The support plate 61 is composed of a metal material having high rigidity and hardly rusting. The background board 60 is a plate-like part having a uniform thickness. The background board 60 is made of a rust-resistant material such as resin. The background board 60 is disposed on the upper frame 11 so that its Y-axis negative side surface is perpendicular to the Y-axis direction.

The background board 60 is plain and has a uniform color. As a color of the background board 60, a color having a high contrast with the fish on the captured image is selected. For example, when target fish species is mackerel, white may be selected as the color of the background board 60.

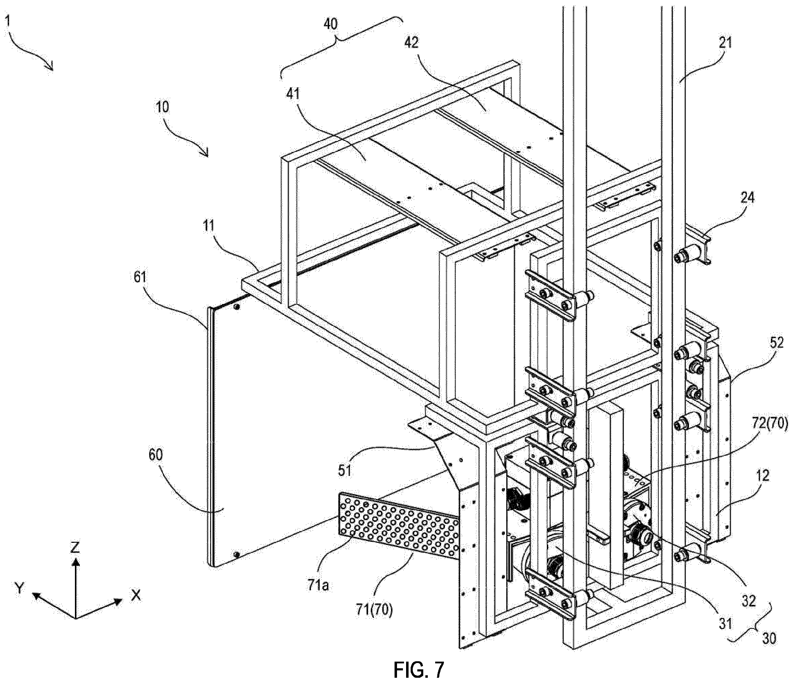

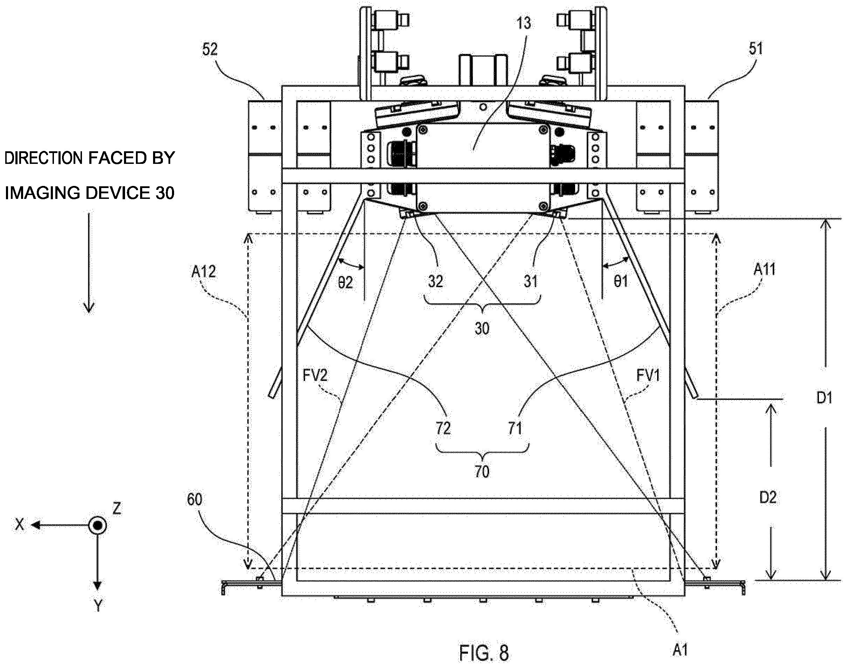

FIG. 7 is an enlarged perspective view of the structure of the fish measuring device 1 in the vicinity of the support frame 10. FIG. 8 is a plan view showing a configuration near the support frame 10.

The fish blocking device 70 includes a first board 71 and a second board 72 arranged in the X-axis direction. The first board 71 is disposed at the X-axis negative end of the upper surface of the support plate 13, and the second board 72 is disposed at the X-axis positive end of the upper surface of the support plate 13.

The first board 71 and the second board 72 are formed with a plurality of circular holes 71a and 72a (see FIG. 3 for the holes 72a) for allowing water to flow. The holes 71a and 72a need not necessarily be plural and may not be circular. For example, only one large rectangular hole that a fish cannot pass through may be formed near the center of the first board 71 and the second board 72.

As shown in FIG. 8, the imaging directions of the cameras 31 and 32 are inclined in opposite directions from each other by the same angle from the Y-axis direction. However, the direction in which the imaging device 30 faces is the positive direction of the Y-axis. That is, a direction connecting a middle position between the cameras 31 and 32 in the X-axis direction and a middle position in the X-axis direction in a range where fields of view FV1 and FV2 of the cameras 31 and 32 overlap is a direction towards which the imaging device 30 faces. Therefore, the direction in which the imaging device 30 faces is the positive direction of the Y-axis.

In a plan view, the first board 71 and the direction in which the imaging device 30 faces form a first oblique angle θ1, and the second board 72 and the direction in which the imaging device 30 faces form a second oblique angle θ2. The first oblique angle θ1 and the second oblique angle θ2 are not 0 nor 90 degrees with respect to the direction in which the imaging device 30 faces. Here, the first oblique angle θ1 and the second oblique angle θ2 are the same. However, the first oblique angle θ1 and the second oblique angle θ2 may be different from each other.

In a plan view, the first board 71 is closer to an entrance A11 of the fish pass A1 on the background board 60 side than on the imaging device 30 side, and the second board 72 is closer to an exit A12 of the fish pass A1 on the background board 60 side than on the imaging device 30 side. That is, the farther from the imaging device 30, the longer the distance between the first board 71 and the second board 72 in the X-axis direction is, and therefore, the first board 71 and the second board 72 are in a state of opening to the outside.

The fish blocking device 70 may be arranged in the fish pass A1 so that the shortest distance D2 between the background board 60 and the fish blocking device 70 (the first board 71 and the second board 72) is smaller than the shortest distance D1 between the background board 60 and the imaging device 30. The background board 60 has a size such that the background board 60 is at least partially arranged in the fields of view FV1 and FV2 of the imaging device 30.

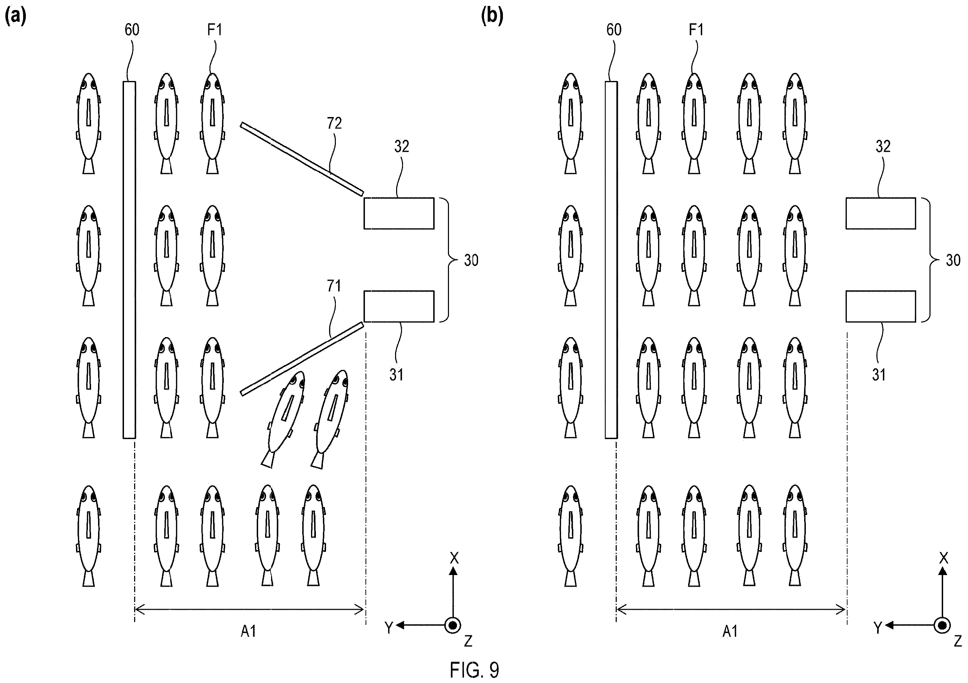

FIG. 9(a) is a diagram schematically showing an operation of the fish blocking device 70. FIG. 9(b) is a diagram schematically showing a state in which the fish blocking device 70 is not used (comparative example).

As shown in FIG. 9(a), when the fish blocking device 70 (first board 71, second board 72) is installed, fish F1 swim in the X-axis positive direction through a space of the fish pass A1 between the fish blocking device 70 and the background board 60. Thus, a distance between the fish F1 and the imaging device 30 is secured.

On the other hand, as shown in FIG. 9(b), when the fish blocking device 70 (first board 71, second board 72) is not installed, the fish F1 swim in an entire width range of the fish pass A1. Therefore, the distance between the fish F1 and the imaging device 30 cannot be secured, and the fish F1 are too close to the imaging device 30.

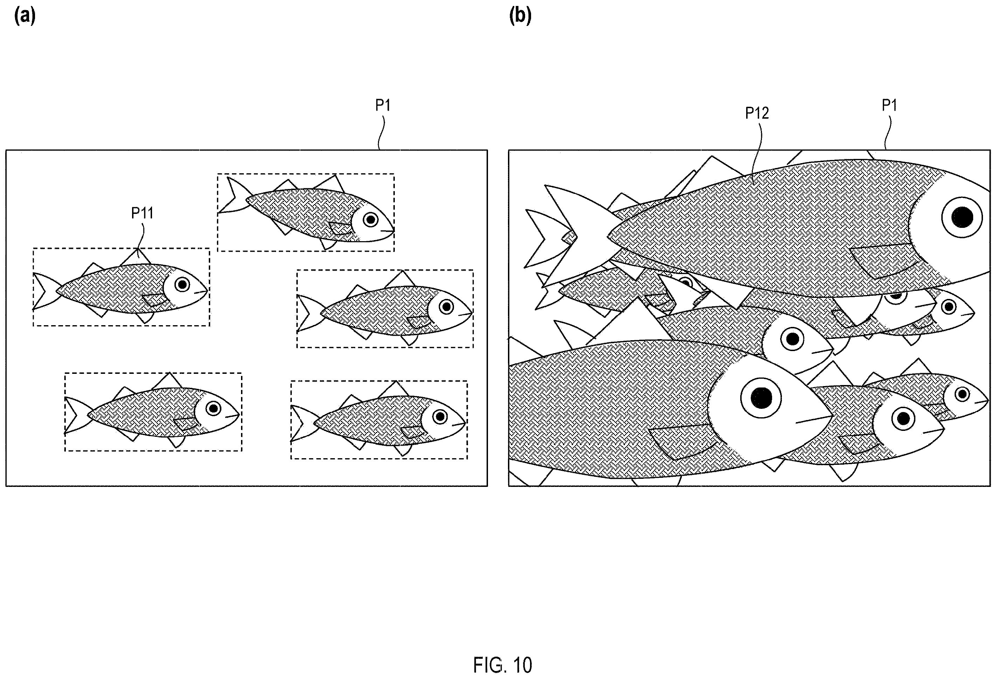

FIG. 10(a) is a diagram schematically showing a captured image P1 of the camera 31 in the case where the fish blocking device 70 is installed. FIG. 10(b) illustrates a diagram schematically showing the captured image P1 of the camera 31 in the case where the fish blocking device 70 is not installed (comparative example).

As shown in FIG. 10(a), when the fish blocking device 70 is installed, the distance between the fish F1 and the imaging device 30 is secured at a distance that is preferable for imaging the fish, so that a whole fish image P11 is easily included in the captured image P1. Since the number of fish swimming in the fish pass A1 is limited by the fish blocking device 70, the fish images P11 are easily separated from each other in the captured image P1. Therefore, an area of the fish indicated by the broken line may be smoothly extracted from the captured image P1, and the characteristic features of the fish may be smoothly calculated.

On the other hand, in the case where the fish blocking device 70 is not installed, since the distance between the fish F1 and the imaging device 30 is not secured, an image P12 of a fish approaching the imaging device 30 occupies a large area in the captured image P1, as shown in FIG. 10(b). In this case, the fish is too close to the camera 31 to be hardly included in the field of view of the camera 31. Since most of that fish is included only in the field of view of the camera 31, it is difficult for the other camera 32 to capture it. Therefore, it is difficult to measure the size of the fish by the parallax of the stereo camera.

Also, since fish behind that fish are hidden by that fish, it is difficult to capture an overall image. Furthermore, in the absence of the fish blocking device 70, since the number of fish swimming in the fish pass A1 is not limited, the pass A1 is densely populated with fish. Therefore, as shown in FIG. 10(b), the fish overlap each other in the captured image P1, making it difficult to acquire a whole fish image of another fish. Therefore, it is difficult to measure the size of fish from images of other fish.

As described above, according to the fish measuring device 1 having the structure according to the present embodiment, by installing the fish blocking device 70, captured images suitable for measuring fish size may be acquired by the cameras 31 and 32 (imaging device 30). Therefore, the size of the fish may be properly measured from the captured images of the cameras 31 and 32.

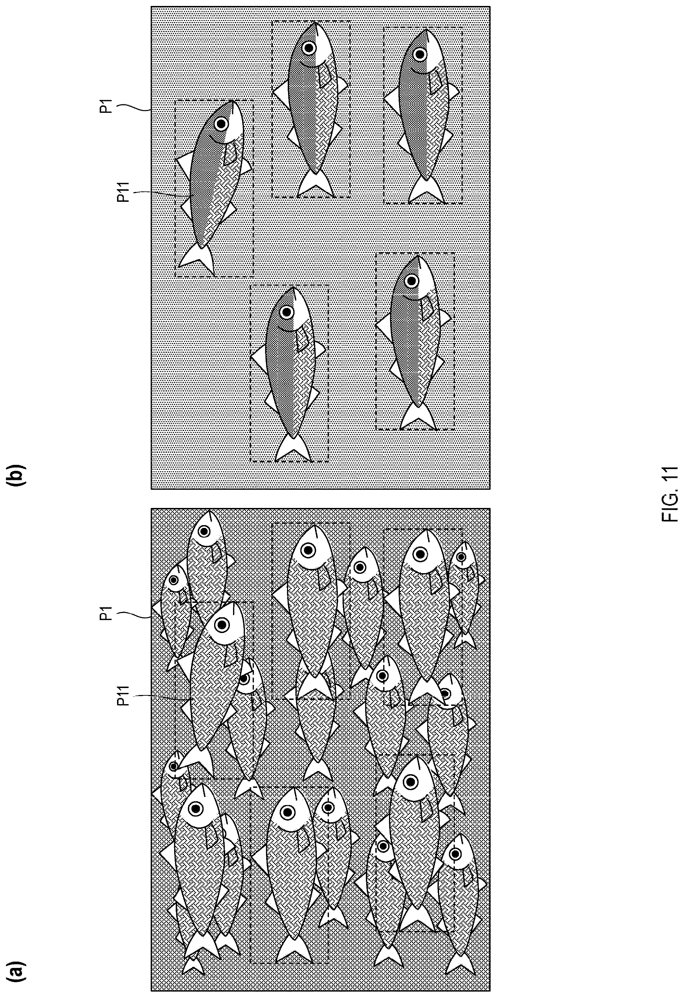

FIG. 11(a) is a diagram schematically showing a captured image P1 in a case where the background board 60 is omitted from the configuration of the present embodiment (another comparative example).

As shown in FIG. 11(a), without the background board 60, fish overlap in the Y-axis direction and background is dark, which makes it difficult to extract the fish image P11 from the captured image P1. On the other hand, when the background board 60 is installed, as shown in FIG. 10(a), the number of fish to be imaged is limited, and contrast between background of the imaged fish and the fish is increased. Therefore, the fish image P11 may be properly extracted from the captured image P1. Thus, the size of fish may be properly measured from the image P11 of the fish.

FIG. 11(b) is a diagram schematically showing a captured image P1 in a case where the first illuminating device 40 is omitted from the configuration of the present embodiment (still another comparative example).

As shown in FIG. 11(b), in the absence of the first illuminating device 40, indoor light may hardly reach to the depth of the imaging device 30. As a result, the entire captured image P1 is darkened, and the back of the fish is darkened in the fish image P11. Therefore, the fish image P11 may not be properly extracted from the captured image P1.

Further, when an amount of light from the second illuminating device 50 is increased, the above problem is solved, but the side surface and the belly of the fish become too bright, and halation occurs. For this reason, the characteristic features located where the halation occurs are lost, and the measurement of the fish may not be properly performed.

On the other hand, when the first illuminating device 40 is installed, the fish pass A1 may be illuminated from above. Therefore, as shown in FIG. 10(a), the captured image P1 that is bright as a whole and the fish image P11 with bright fish back, may be acquired. Thus, the size of the fish may be properly measured from the image P11 of the fish.

In the configuration of the present embodiment, light amounts of the first illuminating device 40 and the second illuminating device 50 may be adjusted to obtain a good fish image P11 and avoid halation. The adjustment may be changed according to the kind of fish stored in the fish cage 2, that is, the kind of fish to be measured. Thus, the fish may be appropriately measured from the captured image according to the fish species.

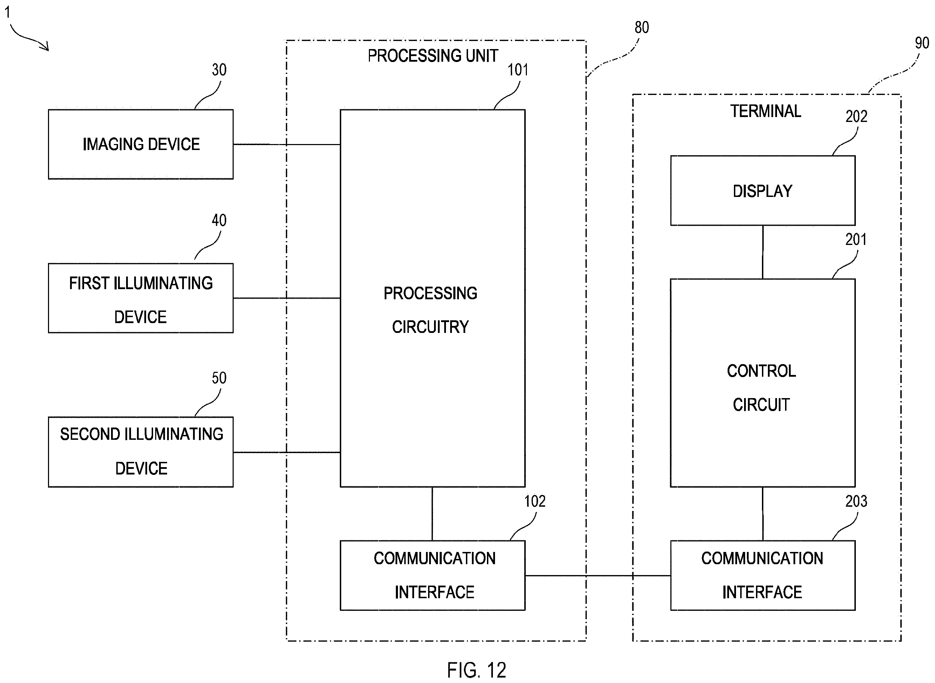

FIG. 12 is a block diagram showing a configuration of the fish measuring device 1.

The processing unit 80 may include processing circuitry 101 and a communication interface 102. The processing circuitry 101 includes an arithmetic processing circuit such as a CPU (Central Processing Unit) and a memory such as ROM (Read Only Memory) and RAM (Random Access Memory), and executes processing related to imaging by a program stored in the memory. The processing circuitry 101 may include a field-programmable gate array (FPGA). The communication interface 102 communicates with a terminal 90 on the ground via a communication cable.

The terminal 90 may include a control circuit 201, a display 202, and a communication interface 203. The terminal 90 may not necessarily be a dedicated machine but may be a tablet terminal. The control circuit 201 is provided with an arithmetic processing circuit such as a CPU and a memory such as ROM and RAM, and executes processing relating to measurement of fish by a program stored in the memory. When the terminal 90 is a tablet terminal, a program related to fish measurement is downloaded and stored in the memory. The display 202 is configured by, for example, a touch panel, displays a display including predetermined information, and receives input through the display. The communication interface 203 communicates with the underwater processing unit 80 via the communication cable.

The user inputs a start instruction of fish measurement through the display 202 of the terminal 90. The control circuit 201 of the terminal 90 transmits the start instruction to the processing unit 80 via the communication interface 203. Thus, the processing circuitry 101 of the processing unit 80 causes the imaging device 30 (cameras 31, 32) to start capturing images, and sequentially transmits the captured images to the terminal 90. The control circuit 201 of the terminal 90 detects fish from the received captured images and calculates the size of each fish.

More specifically, the control circuit 201 detects fish in the images acquired by the cameras 31 and 32 and calculates the size of the detected fish based on the images of the detected fish. The control circuit 201 calculates fork length (i.e., body length of the fish) and body height of the fish in the images. From this calculation result, the control circuit 201 further calculates body weight (estimated value) of the fish. The fork length and body height may be calculated based on an area of the fish on the image and a distance to the fish calculated by the parallax of the cameras 31, 32. The species of the fish may be added to the calculation of the body weight (estimated value).

The control circuit 201 may identify the fish species of the fish included in the image based on the image including the fish. In this case, the control circuit 201 may include a trained processing module that outputs the fish species of the fish when an image including the fish is inputted. The trained processing module is trained beforehand with images of the fish of a predetermined fish species. The training may be based on Artificial Intelligence (AI).

The control circuit 201 may cause the display 202 to display the calculated size of the fish. In this case, the size of the fish (fork length, body height, body weight, etc.) may be displayed as an average size, a histogram showing a frequency of each size, or the like.

The user may adjust the light amount of the first illuminating device 40 and the second illuminating device 50 via the display 202. In this case, the user inputs an instruction for light amount adjustment through the display 202 prior to measurement. As a result, the processing circuitry 101 drives the first illuminating device 40 and the second illuminating device 50 with a default amount of light and causes the imaging device 30 to capture images. The captured images acquired by the imaging device 30 are sequentially transmitted to the terminal 90 and displayed on the display 202.

The user may adjust the light amount of the first illuminating device 40 and the second illuminating device 50 via the display 202 while referring to the images displayed on the display 202. The user may adjust the light amount of the first illuminating device 40 and the second illuminating device 50 so that the images of the fish to be measured become clear and halation does not occur in the images of the fish.

When the light amount adjustment is completed, the user may notify adjustment completion via the display 202. Thereby, a notification of the adjustment completion is transmitted from the terminal 90 to the processing unit 80. The processing circuitry 101 of the processing unit 80 may store light amount (gradations of light amount) after adjustment to the first illuminating device 40 and the second illuminating device 50. During measurement operation, the processing circuitry 101 may drive the first illuminating device 40 and the second illuminating 50 with the stored light amount.

In the present embodiment, when the fish measuring device 1 is installed in the indoor fish cage 2, the light amount of the first illuminating device 40 is usually set larger than that of the second illuminating device 50. That is, the fish pass A1 is brightly illuminated by the first illuminating device 40, and the amount of light lacking thereby is compensated by the second illuminating device 50.

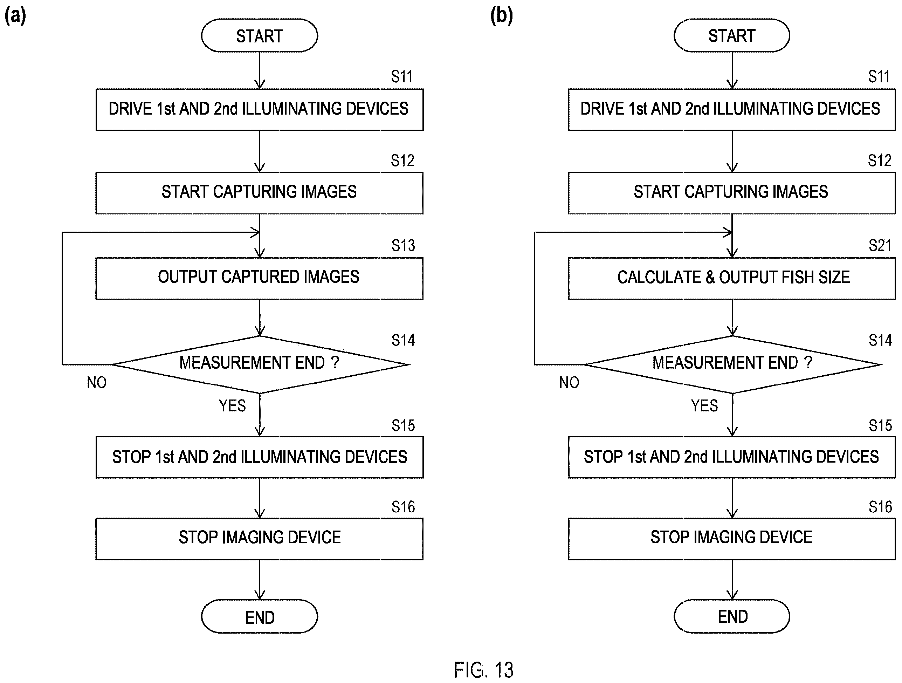

FIG. 13(a) is a flowchart showing the processing performed by the processing circuitry 101 of the processing unit 80 when the fish measurement start instruction is received.

Upon receiving the start instruction, at step S11, the processing circuitry 101 drives the first illuminating device 40 and the second illuminating device 50 with a predetermined amount of light, respectively. The light amount of the first illuminating device 40 and the second illuminating device 50 are set, for example, to the light amount previously adjusted by the user as described above. In addition, the light amount of the first illuminating device 40 and the second illuminating device 50 may be default light amount predetermined for each fish species. In this case, the processing circuitry 101 stores beforehand the light amount for each fish species, and sets the light amount corresponding to the fish species received with the start instruction from the terminal 90 to the first illuminating device 40 and the second illuminating device 50.

Next, at step S12, the processing circuitry 101 causes the imaging device 30 (cameras 31, 32) to start capturing images. At step S13, the processing circuity 101 sequentially outputs the captured images captured by the cameras 31 and 32 to the terminal 90 via the communication interface 102. The processing circuitry 101 continues capturing images and outputting the captured images until an instruction to end measurement is received from the terminal 90 (S14: NO). Thereafter, when the instruction to end measurement is received from the terminal 90 (S14: YES), the processing circuitry 101 stops the first illuminating device 40 and the second illuminating device 50 at step S15, and stops the imaging device 30 at step S16. This completes the processing shown in FIG. 13(a).

According to the configuration of this embodiment, the following effects may be achieved.

As shown in FIGS. 1 to 9(a) and FIG. 13(a), the fish measuring device 1 forms the fish pass A1 between the imaging device 30 and the background board 60 by arranging the background board 60 at least partially in the field of view FV1, FV2 of the imaging device 30, separates the fish swimming in the pass A1 from the imaging device 30 by blocking the part of the fish pass A1 on the imaging device 30 side with the fish blocking device 70, illuminates the fish pass A1 from above and from the side of the imaging device 30 with the first illuminating device 40 and the second illuminating device 50, captures images of the fish swimming in the fish pass A1 with the imaging device 30, and processes the captured images (output of the captured images: at step S13 in FIG. 13(a)).

Thereby, both the upper part and the lower part of the body of the fish may be well illuminated by adjusting illumination intensity (light amount) and illumination ratio of the first illuminating device 40 and the second illuminating device 50 according to fish species. Further, since the background board 60 is disposed in the background of the fish pass A1, the contrast between the fish and the background may be enhanced in any kind of fish cage environment. Furthermore, since the portion of the fish pass A1 on the imaging device 30 side is blocked by the fish blocking device 70, the number of fish included in the imaging region may be reduced even when the density of fish is high in the fish cage 2, and the distance necessary for measuring the fish may be secured between the fish and the imaging device 30. As a result, as shown in FIG. 10(a), the fish image P11 of high quality may be acquired, and the fish swimming in the water may be measured with high accuracy.

As shown in FIG. 8, the fish blocking device 70 may be placed in the fish pass A1 such that the shortest distance D2 between the background board 60 and the fish blocking device 70 is smaller than the shortest distance D1 between the background board 60 and the imaging device 30. Thus, the fish is easily separated from the imaging device 30 by a difference between the shortest distance D2 between the background board 60 and the fish blocking device 70 and the shortest distance D1 between the background board 60 and the imaging device 30. Therefore, as described with reference to FIGS. 9(a) and 10(a), a good fish image P11 may be obtained.

As shown in FIG. 8, the fish blocking device 70 may include one or more boards. More specifically, the fish blocking device 70 may include the first board 71, and the first board 71 and the direction in which the imaging device 30 faces may make a first oblique angle θ1 in a plan view. In the plan view, the first board 71 may be closer to the entrance A11 of the fish pass A1 on the background board 60 side than on the imaging device 30 side. Thus, as shown in FIG. 9(a), the fish F1 entering the imaging region through the space between the first board 71 and the background board 60, may be separated from the imaging device 30.

As shown in FIG. 8, the fish blocking device 70 may further include a second board 72 different from the first board 71, the second board 72, and the direction in which the imaging device 30 faces may make a second oblique angle θ2 in a plan view. In the plan view, the second board 72 may be closer to the exit A12 of the fish pass A1 on the background board 60 side than on the imaging device 30 side. As a result, as shown in FIG. 9(a), the fish F1, which pass through the imaging region towards the space between the second board 72 and the background board 60, may be separated from the imaging device 30.

As shown in FIGS. 1 to 3 and FIG. 7, the first board 71 and the second board 72 may include one or more holes 71a, 72a for water to flow. Thus, the resistance of water flow to the first board 71 and the second board 72 may be reduced, and the first board 71 and the second board 72 may be maintained in a stable state.

As shown in FIG. 5, the imaging device 30 (cameras 31, 32) may substantially face in the horizontal direction (direction parallel to the X-Y plane), and the second illuminating device 50 may illuminate at least in the direction substantially the same as the direction in which the imaging device 30 faces (positive Y-axis direction). Thus, the fish swimming in the pass A1 may be illuminated in the imaging direction by the second illuminating device 50.

As shown in FIG. 5, the second illuminating device 50 may include an array (LED arrays 51a - 51c, 52a- 52c) of a plurality of LEDs grouped into a first group (LED arrays 51a, 52a) and a second group (LED arrays 51b, 52b and/or LED arrays 51c, 52c), wherein the first group illuminates horizontally and the second group illuminates a different illumination direction from the first group. Thus, the fish swimming in the pass A1 may be horizontally illuminated by the second illuminating device 50 and may be illuminated in a direction different from the horizontal direction.

As shown in FIG. 5, the illumination direction of the second group (LED arrays 51b, 52b) may be vertical. Thus, the fish swimming in the pass A1 may be vertically illuminated by the first illuminating device 40 and the second group of the second illuminating device 50.

As shown in FIGS. 1 to 3, the fish measuring device 1 may further include the support frame 10 on which the imaging device 30, the background board 60, the first illuminating device 40, the second illuminating 50, and the fish blocking device 70 are attached, and the pair of rails 21 to vertically move the support frame 10. Thus, by moving the support frame 10 along the pair of rails 21, the imaging device 30, the background board 60, the first illuminating device 40, the second illuminating device 50, and the fish blocking device 70, may be moved integrally in the depth direction. Thus, the fish pass A1 and an imaging position of the fish may be positioned at a depth position suitable for the fish species to be measured.

The user may easily remove the support frame 10 from the pair of rails 21 by lifting the support frame 10 upwards. Therefore, the user may detach the support frame 10 from the pair of rails 21 appropriately after installation of the fish measuring device 1, and may easily replace and detach parts (for example, background board 60) mounted on the support frame 10. Further, the user may easily transport the fish measuring device 1 by appropriately separating the support frame 10 on which the respective parts are mounted from the lifting device 20.

The processing circuitry 101 has performed processing for outputting the captured image to the terminal 90 (step S13 in FIG. 13(a)) as processing for the captured image, but the processing performed by the processing circuitry 101 is not limited to this. In accordance with a first modification, for example, the processing circuitry 101 may perform processing to calculate the size of the fish swimming in the fish pass A1 from the captured image and output the calculation result to the terminal 90.

FIG. 13(b) is a flowchart showing the processing in this case.

In the flowchart of FIG. 13(b), step S13 of the flowchart of FIG. 13(a) is changed to step S21. The other steps in FIG. 13(b) are the same as the corresponding steps in FIG. 13(a).

At step S21, the processing circuitry 101 calculates the size (fork length, body height, body weight, etc.) of the fish based on the captured images acquired by the imaging device 30 (cameras 31, 32), and sequentially outputs the calculation results to the terminal 90. The calculation method of the fish size is the same as the calculation method performed by the terminal 90 in the above embodiment.

With this configuration, the size of the fish may be calculated with high accuracy based on the high-quality fish images shown in FIG. 10(a), as in the above embodiment. Since the calculation processing of the size of the fish is performed on the processing unit 80 side, the processing load of the terminal 90 may be reduced.

In the processing of FIG. 13(b), the processing circuitry 101 may further output the captured image acquired by the imaging device 30 to the terminal 90. Thus, the terminal 90 may display the state of the fish swimming in the water on the display 202 together with the calculation result of the size of the fish, and the user may grasp the state of the fish in the fish cage 2 together with the size of the fish.

In accordance with a second modification, the configuration of the fish blocking device 70 is not limited to the configuration shown in the above embodiment and may be varied in various ways.

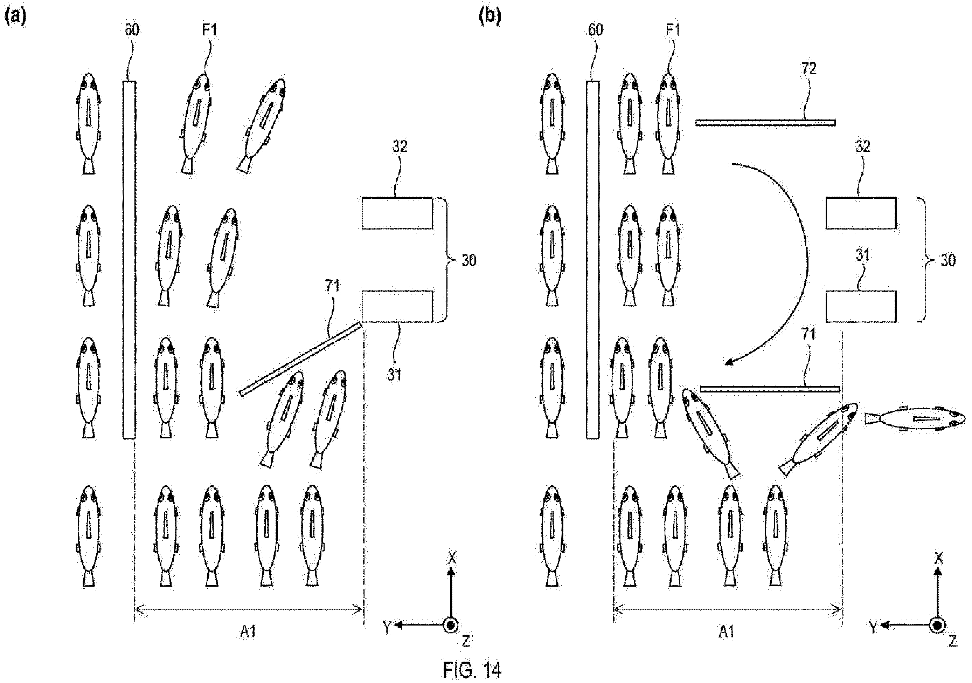

For example, as shown in FIG. 14(a), the second board 72 may be omitted, and the fish blocking device 70 may include only the first board 71. In this case, as in the above-described embodiment, the fish F1 entering the imaging region from the entrance A11 may be separated from the imaging device 30.

However, in this case, since the exit A12 is not restricted by the second board 72, it is easy for the fish F1 that have passed between the first board 71 and the background board 60 to change swimming direction to gradually approach the imaging device 30. Therefore, as compared with the above-described embodiment, the fish F1 may be easily imaged with a slight inclination, and the distance between the fish F1 and the imaging device 30 may be easily shortened from an ideal distance. Therefore, to obtain a high-quality image of the fish, it is preferable that the second board 72 be disposed together with the first board 71, as in the above embodiment.

Further, as shown in FIG. 14(b), the first board 71 and the second board 72 may be disposed without tilting with respect to the direction in which the imaging device 30 faces (i.e., the positive direction of the Y-axis). In this case, as in the above-described embodiment, the fish F1 entering the imaging region from the entrance A11, may be separated from the imaging device 30, and the fish F1 advancing in the imaging region toward the exit A12, may be separated from the imaging device 30.

However, in this case, since the fish F1 facing the first board 71 on the entrance side is hardly guided in the Y-axis negative direction by the first board 71, the fish F1 may be directed to the space between the first board 71 and the background board 60. Therefore, the density of fish passing through the space increases, and more fish are easily included in the captured image than in the case of the above embodiment.

If the fish F1 that have passed between the first board 71 and the background board 60 accidentally approach the imaging device 30, the second board 72 on the exit side may become an obstacle, and the fish F1 may circle between the first board 71 and the second board 72 as shown by an arrow in FIG. 14(b). This makes it difficult to obtain a proper image of the fish while the fish F1 are circling.

On the other hand, in the above embodiment, since the first board 71 is inclined as shown in FIG. 9(a), the fish F1 facing the first board 71, are easily guided in the negative Y-axis direction by the first board 71. Therefore, the increase of density of the fish F1 passing through the space between the first board 71 and the background board 60, may be suppressed, and the number of fish included in the captured image, may be reduced. Therefore, the fish may be easily separated on the captured images.

Also, as shown in FIG. 9(a), since the second board 72 is also tilted, even if the fish F1 accidentally head in a direction approaching the imaging device 30, the fish F1 are guided to a range between the second board 72 and the background board 60 by the second board 72. Therefore, the circling of the fish F1 between the first board 71 and the second board 72, may be suppressed, and an appropriate image of the fish may be stably obtained.

The number of boards provided in the fish blocking device 70 is not limited to 2 or 1 but may be 3 or more. For example, the first board 71 on the entrance side, may be divided into a plurality of pieces in the Z-axis direction, and the second board 72 on the exit side, may be divided into a plurality of pieces in the Z-axis direction.

The shapes of the first board 71 and the second board 72 are not limited to the shape shown in the above embodiment but may be other shapes. For example, the first board 71 may be bent so that both ends of the first board 71 in the Z-axis direction are closer to the exit A12 of the pass A1 than the center in the Z-axis direction, or the first board 71 may be arcuately bent. Thus, the fish entering the pass A1 and facing the first board 71 may be easily released up and down.

The second board 72 may be bent so that both ends of the second board 72 in the Z-axis direction are further away from the entrance A11 of the pass A1 than the center in the Z-axis direction, or the second board 72 may be arcuately bent. As a result, after entering through the space between the first board 71 and the background board 60, the fish which accidentally move in a direction approaching the imaging device 30 and face the second board 72 may be easily released up and down.

The first board 71 and the second board 72 may have a shape in which a width in the Z-axis direction becomes wider towards the tip. The holes 71a and 72a may not be formed in the first board 71 and the second board 72. The fish blocking device 70 may have another obstacle structure such as a frame instead of the first board 71 and the second board 72.

In the above embodiment, white is exemplified as the color of the background board 60, but the color of the background board 60 is not limited to this. For example, if the color of the fish of the target fish species is close to white, a color having a high contrast with the fish of the target fish species, such as blue, may be selected as the color of the background board 60. The user may install, on the support frame 10, a background board 60 of a color having a high contrast with the fish according to the kind of the fish to be measured and housed in the fish cage 2.

Further, in the above embodiment, the second illuminating device 50 illuminates not only in the horizontal direction but also in the direction vertically down and the oblique direction, but the configuration of the second illuminating device 50 is not limited to this. For example, the second illuminating device 50 may illuminate only in the horizontal direction. However, as in the above-described embodiment, when the second illuminating device 50 illuminates not only in the horizontal direction but also in the direction vertically down and the oblique direction, the back and the fin of the fish which tend to be dark in an indoor fish cage may be illuminated from various angles by the second illuminating device 50. Thus, a higher quality image of the fish may be acquired, and the measurement of the fish may be performed with high accuracy.

The illumination direction of the second illuminating device 50 may be further increased from the 3 directions described in the above embodiment. The illumination direction of the second illuminating device 50 may be smoothly changed instead of being changed stepwise. In this case, the base plate 51d of the second illuminating device 50 may be changed to a shape in which an arc-shaped curved portion is connected to an upper end of a portion parallel to the X-Z plane, for example.

The light sources of the first illuminating device 40 and the second illuminating device 50 may be light sources other than LEDs, such as lamps, or may be a mixture of LEDs and other types of light sources.

In the above embodiment, the fish measuring device 1 is applied to the fish cage 2 installed indoors, but the fish measuring device 1 having the above structure may also be applied to the fish cage 2 installed outdoors. In this case, the first illuminating device 40 may be removed from the fish measuring device 1, or the first illuminating device 40 may be turned off when sufficient light reaches the imaging region, such as on a clear day. In this case as well, a high-quality image of the fish may be obtained by the action of the fish blocking device 70, and the measurement of the fish may be performed with high accuracy.

In the above embodiment, the support frame 10 is composed of the upper frame 11 and the lower frame 12, but the support frame 10 may be composed of one frame or three or more frames.

In the above embodiment, the stereo camera is constituted by the cameras 31 and 32 arranged in the X-axis direction, but the stereo camera may be constituted by three or more cameras. The direction in which the cameras 31 and 32 is arranged does not have to be the X-axis direction but may be another direction.

In the above embodiment, the imaging device 30 includes the cameras 31 and 32, but the imaging device 30 may include only one camera. In this case, the distance to the fish on the image that was acquired by the cameras may be acquired, for example, by echo data from an underwater ultrasonic device. The underwater ultrasonic device is arranged side by side with the camera and transmits and receives ultrasonic waves to a range including the imaging region. The distance to the fish first detected by ultrasound in a direction corresponding to a position of the fish on the captured image may be used as the distance to the fish on the captured image.

The fish measuring device 1 may be used for facilities other than fish cages. That is, the fish measuring device 1 may be used in other situations for measuring fish swimming in water.

In addition, various embodiments of the present disclosure may be modified as appropriate within the scope of the claims.

## Claims

1. A fish measuring device (1) comprising:
an imaging device (30) configured to capture an image of a fish swimming in water;
a background board (60) at least partially placed in a field of view of the imaging device (30);
a first illuminating device (40) configured to illuminate a fish pass (A1) between the imaging device (30) and the background board (60) from above the fish pass (A1);
a second illuminating device (50) configured to illuminate the fish pass (A1) from a side of the imaging device (30);
a fish blocking device (70) configured to block a part of the fish pass (A1) on the imaging device (30) side; and
processing circuitry (101) configured to process the captured image of the fish swimming in the fish pass (A1),
**characterized in that**:
the fish blocking device (70) comprises a first board (71);
in a plan view, the first board (71) and a direction in which the imaging device (30) faces make an oblique angle (θ1); and
in a plan view, the first board (71) is closer to an entrance (A11) of the fish pass (A1) on the background board (60) side than on the imaging device (30) side.

2. The fish measuring device (1) of claim 1, wherein
the fish blocking device (70) is placed in the fish pass (A1) such that the shortest distance (D2) between the background board (60) and the fish blocking device (70) is smaller than the shortest distance (D1) between the background board (60) and the imaging device (30).

3. The fish measuring device (1) of claim 1 or claim 2, wherein
the fish blocking device (70) comprises two or more boards (71, 72).

4. The fish measuring device (1) of any of the preceding claims, wherein
the first board (71) comprises one or more holes for water to flow.

5. The fish measuring device (1) of any of the preceding claims, wherein
the fish blocking device (70) further comprises a second board (72) different from the first board (71); and
in a plan view, the second board (72) and the direction in which the imaging device (30) faces make a second oblique angle (θ2).

6. The fish measuring device (1) of claim 5, wherein
in a plan view, the second board (72) is closer to an exit (A12) of the fish pass (A1) on the background board (60) side than on the imaging device (30) side.

7. The fish measuring device (1) of claim 5 or claim 6, wherein
the second board (72) comprises one or more holes for water to flow.

8. The fish measuring device (1) of any of claims 5 to 7, wherein
the first board (71) and the second board (72) are in a state of opening to the outside.

9. The fish measuring device (1) of any of claims 5 to 8, wherein
the distance between the first board (71) and the second board (72) increases with increasing distance from the imaging device (30).

10. The fish measuring device (1) of any of the preceding claims, wherein
the imaging device (30) substantially faces in a horizontal direction; and
the second illuminating device (50) illuminates at least in a direction substantially the same as the direction in which the imaging device (30) faces.

11. The fish measuring device (1) of any of the preceding claims, wherein
the second illuminating device (50) comprises an array of a plurality of LEDs grouped into a first group (51a, 52a) and a second group (51b, 52b, 51c, 52c), the first group (51a, 52a) illuminates horizontally, and the second group (51b, 52b, 51c, 52c) illuminates in a different illumination direction than the first group (51a, 52a).

12. The fish measuring device (1) of claim 11, wherein
the illumination direction of the second group (51b, 52b) is vertical.

13. The fish measuring device (1) of any of the preceding claims, further comprising:
a frame (10) on which the imaging device (30), the background board (60), the first illuminating device (40), the second illuminating device (50), and the fish blocking device (70) are attached; and
a rail (21) to vertically move the frame (10).

14. The fish measuring device (1) of any of the preceding claims, wherein
the processing circuitry (101) is configured to calculate a size of the fish swimming in the fish pass (A1) from the captured image.

15. A fish measuring method, comprising:
forming a fish pass (A1) between an imaging device (30) and a background board (60) by placing at least a part of the background board (60) in a field of view of the imaging device (30);
blocking a part of the fish pass (A1) on an imaging device (30) side to separate a fish swimming in the fish pass (A1) from the imaging device (30);
illuminating the fish pass (A1) from above and from a side of the imaging device (30); and
capturing an image of the fish swimming in the fish pass (A1) using the imaging device (30) and processing the captured image;
**characterized in that**:
the part of the fish pass (A1) is blocked using a first board (71);
in a plan view, the first board (71) and a direction in which the imaging device (30) faces make an oblique angle (θ1); and
in a plan view, the first board (71) is closer to an entrance (A11) of the fish pass (A1) on the background board (60) side than on the imaging device (30) side.

## Patentansprüche

1. Fischvermessungsvorrichtung (1), umfassend:
eine Abbildungsvorrichtung (30) konfiguriert, ein Bild eines Fisches beim Schwimmen in Wasser zu erfassen;
ein Hintergrundbrett (60) mindestens teilweise in einem Sichtfeld der Abbildungsvorrichtung (30) platziert;
eine erste Beleuchtungsvorrichtung (40) konfiguriert zum Beleuchten einer Fischtreppe (A1) zwischen der Abbildungsvorrichtung (30) und dem Hintergrundbrett (60) von oberhalb der Fischtreppe (A1);
eine zweite Beleuchtungsvorrichtung (50) konfiguriert zum Beleuchten der Fischtreppe (A1) von einer Seite der Abbildungsvorrichtung (30) aus;
eine Fischblockiervorrichtung (70) konfiguriert zum Blockieren eines Teils der Fischtreppe (A1) auf der Seite der Abbildungsvorrichtung (30); und
Verarbeitungsschaltungen (101) konfiguriert, das erfasste Bild des in der Fischtreppe (A1) schwimmenden Fisches zu verarbeiten,
**dadurch gekennzeichnet, dass**:
die Fischblockiervorrichtung (70) ein erstes Brett (71) umfasst;
in einer Draufsicht das erste Brett (71) und eine Richtung, in welche die Abbildungsvorrichtung (30) gekehrt ist, einen schiefen Winkel (θ1) bilden; und
in einer Draufsicht das erste Brett (71) dichter zu einem Eingang (A11) der Fischtreppe (A1) auf der Seite des Hintergrundbretts (60) als auf der Seite der Abbildungsvorrichtung (30) liegt.

2. Fischvermessungsvorrichtung (1) nach Anspruch 1, wobei
die Fischblockiervorrichtung (70) in der Fischtreppe (A1) derart platziert ist, dass der kürzeste Abstand (D2) zwischen dem Hintergrundbrett (60) und der Fischblockiervorrichtung (70) kleiner als der kürzeste Abstand (D1) zwischen dem Hintergrundbrett (60) und der Abbildungsvorrichtung (30) ist.

3. Fischvermessungsvorrichtung (1) nach Anspruch 1 oder Anspruch 2, wobei die Fischblockiervorrichtung (70) zwei oder mehr Bretter (71, 72) umfasst.

4. Fischvermessungsvorrichtung (1) nach einem der vorangehenden Ansprüche, wobei
das erste Brett (71) ein oder mehrere Löcher zum Hindurchfließen von Wasser umfasst.

5. Fischvermessungsvorrichtung (1) nach einem der vorangehenden Ansprüche, wobei
die Fischblockiervorrichtung (70) ferner ein zweites Brett (72), das vom ersten Brett (71) verschieden ist, umfasst; und
in einer Draufsicht das zweite Brett (72) und die Richtung, in welche die Abbildungsvorrichtung (30) gekehrt ist, einen zweiten schiefen Winkel (θ2) bilden.

6. Fischvermessungsvorrichtung (1) nach Anspruch 5, wobei
in einer Draufsicht das zweite Brett (72) dichter zu einem Ausgang (A12) der Fischtreppe (A1) auf der Seite des Hintergrundbretts (60) als auf der Seite der Abbildungsvorrichtung (30) liegt.

7. Fischvermessungsvorrichtung (1) nach Anspruch 5 oder Anspruch 6, wobei
das zweite Brett (72) ein oder mehrere Löcher zum Hindurchfließen von Wasser umfasst.

8. Fischvermessungsvorrichtung (1) nach einem der Ansprüche 5 bis 7, wobei
das erste Brett (71) und das zweite Brett (72) sich in einem Zustand einer Öffnung nach außen befinden.

9. Fischvermessungsvorrichtung (1) nach einem der Ansprüche 5 bis 8, wobei
der Abstand zwischen dem ersten Brett (71) und dem zweiten Brett (72) mit zunehmendem Abstand von der Abbildungsvorrichtung (30) zunimmt.

10. Fischvermessungsvorrichtung (1) nach einem der vorangehenden Ansprüche, wobei
die Abbildungsvorrichtung (30) im Wesentlichen in eine horizontale Richtung gekehrt ist; und
die zweite Beleuchtungsvorrichtung (50) mindestens in eine Richtung, die im Wesentlichen dieselbe ist wie die Richtung, in die die Abbildungsvorrichtung (30) gekehrt ist, beleuchtet.

11. Fischvermessungsvorrichtung (1) nach einem der vorangehenden Ansprüche, wobei
die zweite Beleuchtungsvorrichtung (50) ein Array einer Mehrzahl von in eine erste Gruppe (51a, 52a) und eine zweite Gruppe (51b, 52b, 51c, 52c) gruppierten LEDs umfasst, wobei die erste Gruppe (51a, 52a) horizontal beleuchtet und die zweite Gruppe (51b, 52b, 51c, 52c) in eine unterschiedliche Beleuchtungsrichtung beleuchtet als die erste Gruppe (51a, 52a).

12. Fischvermessungsvorrichtung (1) nach Anspruch 11, wobei die Beleuchtungsrichtung der zweiten Gruppe (51b, 52b) vertikal ist.

13. Fischvermessungsvorrichtung (1) nach einem der vorangehenden Ansprüche, ferner umfassend:
einen Rahmen (10), an dem die Abbildungsvorrichtung (30), das Hintergrundbrett (60), die erste Beleuchtungsvorrichtung (40), die zweite Beleuchtungsvorrichtung (50) und die Fischblockiervorrichtung (70) angebracht sind; und
eine Schiene (21) für vertikale Bewegung des Rahmens (10).

14. Fischvermessungsvorrichtung (1) nach einem der vorangehenden Ansprüche, wobei
die Verarbeitungsschaltungen (101) konfiguriert sind, eine Größe des in der Fischtreppe (A1) schwimmenden Fisches aus dem erfassten Bild zu berechnen.

15. Fischvermessungsverfahren, umfassend:
Bilden einer Fischtreppe (A1) zwischen einer Abbildungsvorrichtung (30) und einem Hintergrundbrett (60) durch Platzieren zumindest eines Teils des Hintergrundbretts (60) in einem Sichtfeld der Abbildungsvorrichtung (30) ;
Blockieren eines Teils der Fischtreppe (A1) auf einer Seite der Abbildungsvorrichtung (30), um einen in der Fischtreppe (A1) schwimmenden Fisch von der Abbildungsvorrichtung (30) zu trennen;
Beleuchten der Fischtreppe (A1) von oben und von einer Seite der Abbildungsvorrichtung (30); und
Erfassen eines Bildes des Fisches beim Schwimmen in der Fischtreppe (A1) unter Verwendung der Abbildungsvorrichtung (30) und Verarbeiten des erfassten Bildes;
**dadurch gekennzeichnet, dass**:
der Teil der Fischtreppe (A1) unter Verwendung eines ersten Bretts (71) blockiert ist;
in einer Draufsicht das erste Brett (71) und eine Richtung, in welche die Abbildungsvorrichtung (30) gekehrt ist, einen schiefen Winkel (θ1) bilden; und
in einer Draufsicht das erste Brett (71) dichter zu einem Eingang (A11) der Fischtreppe (A1) auf der Seite des Hintergrundbretts (60) als auf der Seite der Abbildungsvorrichtung (30) liegt.

## Revendications

1. Dispositif de mesure de poisson (1) comprenant :
un dispositif d'imagerie (30) configuré pour capturer une image d'un poisson nageant dans l'eau ;
un panneau d'arrière-plan (60) placé au moins en partie dans un champ de vision du dispositif d'imagerie (30) ;
un premier dispositif d'éclairage (40) configuré pour éclairer un passage pour poisson (A1) entre le dispositif d'imagerie (30) et le panneau d'arrière-plan (60) depuis le dessus du passage pour poisson (A1) ;
un second dispositif d'éclairage (50) configuré pour éclairer le passage pour poisson (A1) depuis un côté du dispositif d'imagerie (30) ;
un dispositif de blocage de poisson (70) configuré pour bloquer une partie du passage pour poisson (A1) du côté du dispositif d'imagerie (30) ; et
une circuiterie de traitement (101) configurée pour traiter l'image capturée du poisson nageant dans le passage pour poisson (A1),
le dispositif de mesure de poisson étant **caractérisé en ce que** :
le dispositif de blocage de poisson (70) comprend un premier panneau (71) ;
dans une vue en plan, le premier panneau (71) et une direction dans laquelle le dispositif d'imagerie (30) est orienté forment un angle oblique (θ1) ; et
dans une vue en plan, le premier panneau (71) est plus proche d'une entrée (A11) du passage pour poisson (A1) du côté du panneau d'arrière-plan (60) que du côté du dispositif d'imagerie (30).

2. Dispositif de mesure de poisson (1) selon la revendication 1,
le dispositif de blocage de poisson (70) étant placé dans le passage pour poisson (A1) de telle sorte que la distance la plus courte (D2) entre le panneau d'arrière-plan (60) et le dispositif de blocage de poisson (70) soit inférieure à la distance la plus courte (D1) entre le panneau d'arrière-plan (60) et le dispositif d'imagerie (30).

3. Dispositif de mesure de poisson (1) selon la revendication 1 ou 2,
le dispositif de blocage de poisson (70) comprenant deux panneaux (71, 72) ou plus.

4. Dispositif de mesure de poisson (1) selon l'une quelconque des revendications précédentes,
le premier panneau (71) comprenant un ou plusieurs trous pour permettre à l'eau de s'écouler.

5. Dispositif de mesure de poisson (1) selon l'une quelconque des revendications précédentes,
le dispositif de blocage de poisson (70) comprenant en outre un second panneau (72) différent du premier panneau (71) ; et
dans une vue en plan, le second panneau (72) et la direction dans laquelle le dispositif d'imagerie (30) est orienté formant un second angle oblique (θ2).

6. Dispositif de mesure de poisson (1) selon la revendication 5,
dans une vue en plan, le second panneau (72) étant plus proche d'une sortie (A12) du passage pour poisson (A1) du côté du panneau d'arrière-plan (60) que du côté du dispositif d'imagerie (30).

7. Dispositif de mesure de poisson (1) selon la revendication 5 ou 6,
le second panneau (72) comprenant un ou plusieurs trous pour permettre à l'eau de s'écouler.

8. Dispositif de mesure de poisson (1) selon l'une quelconque des revendications 5 à 7,
le premier panneau (71) et le second panneau (72) étant dans un état d'ouverture vers l'extérieur.

9. Dispositif de mesure de poisson (1) selon l'une quelconque des revendications 5 à 8,
la distance entre le premier panneau (71) et le second panneau (72) augmentant avec l'augmentation de la distance par rapport au dispositif d'imagerie (30).

10. Dispositif de mesure de poisson (1) selon l'une quelconque des revendications précédentes,
le dispositif d'imagerie (30) étant orienté sensiblement dans une direction horizontale ; et
le second dispositif d'éclairage (50) éclairant au moins dans une direction sensiblement identique à la direction dans laquelle le dispositif d'imagerie (30) est orienté.

11. Dispositif de mesure de poisson (1) selon l'une quelconque des revendications précédentes,
le second dispositif d'éclairage (50) comprenant un réseau d'une pluralité de LED regroupées en un premier groupe (51a, 52a) et un second groupe (51b, 52b, 51c, 52c), le premier groupe (51a, 52a) éclairant horizontalement et le second groupe (51b, 52b, 51c, 52c) éclairant dans une direction d'éclairage différente de celle du premier groupe (51a, 52a).

12. Dispositif de mesure de poisson (1) selon la revendication 11,
la direction d'éclairage du second groupe (51b, 52b) étant verticale.

13. Dispositif de mesure de poisson (1) selon l'une quelconque des revendications précédentes, comprenant en outre :
un cadre (10) sur lequel sont fixés le dispositif d'imagerie (30), le panneau d'arrière-plan (60), le premier dispositif d'éclairage (40), le second dispositif d'éclairage (50) et le dispositif de blocage de poisson (70) ; et
un rail (21) pour déplacer verticalement le cadre (10).

14. Dispositif de mesure de poisson (1) selon l'une quelconque des revendications précédentes,
la circuiterie de traitement (101) étant configurée pour calculer une taille du poisson nageant dans le passage pour poisson (A1) à partir de l'image capturée.

15. Procédé de mesure de poisson, comprenant les étapes consistant à :
former un passage pour poisson (A1) entre un dispositif d'imagerie (30) et un panneau d'arrière-plan (60) en plaçant au moins une partie du panneau d'arrière-plan (60) dans un champ de vision du dispositif d'imagerie (30) ;
bloquer une partie du passage pour poisson (A1) d'un côté du dispositif d'imagerie (30) afin de séparer un poisson nageant dans le passage pour poisson (A1) du dispositif d'imagerie (30) ;
éclairer le passage pour poisson (A1) depuis le haut et depuis un côté du dispositif d'imagerie (30) ; et
capturer une image du poisson nageant dans le passage pour poisson (A1) au moyen du dispositif d'imagerie (30) et traiter l'image capturée ;
le procédé étant **caractérisé en ce que** :
la partie du passage pour poisson (A1) est bloquée au moyen d'un premier panneau (71) ;
dans une vue en plan, le premier panneau (71) et une direction dans laquelle le dispositif d'imagerie (30) est orienté forment un angle oblique (θ1) ; et
dans une vue en plan, le premier panneau (71) est plus proche d'une entrée (A11) du passage pour poisson (A1) du côté du panneau d'arrière-plan (60) que du côté du dispositif d'imagerie (30).
